# EUROPEAN PATENT SPECIFICATION

(11) **EP 0 618 178 B1**
(45) Date of publication and mention of the grant of the patent: **11.06.1997**
(21) Application number: 94302183.2
(22) Date of filing: 25.03.1994
(51) Int. Cl.: C03C 15/00, C03C 17/32, C03C 27/12

(54) **Method for strengthening a glass ply**
Verfahren zur Verstärkung einer Glasscheibe
Procédé pour le renforcement d'une plaque de verre

(30) Priority: 27.03.1993 GB 9306430
(43) Date of publication of application: 05.10.1994
(73) Proprietor: PILKINGTON AEROSPACE LIMITED, Kings Norton, Birmingham B38 8SR (GB)
(72) Inventor: Hall, Christopher William Geoffrey, Redditch, Worcestershire (GB); Boguslavski, Igor A., Moscow 11792 (RU); Murphy, Norman Aidan, Woolton, Liverpool L25 4RS (GB); Solinov, Vladimir F., Institute of Technical Glass, 117218 MOSCOW (RU)
(74) Representative: Halliwell, Anthony Charles

(56) References cited:
- EP-A- 0 130 886
- GB-A- 1 230 678
- US-A- 3 799 817
- SOVIET JOURNAL OF OPTICAL TECHNOLOGY vol. 41, no. 9 , September 1974 pages 431 - 432 L.A. ORLOVA ET AL. 'Strengthening Quartz Optical Components by a Chemical Treatment'

## Description

The invention relates to a method of strengthening glass by acid etching and to glass components so strengthened and laminated glazings containing them.

It has long been known that glass may be strengthened by etching the surface of the glass to remove the surface layer and any defects therein which may act as a site for crack propagation leading to failure of the glass. For example, it is proposed in Swiss patent specification 367 942 dated 1958 and US patent 3 711 263 dated 1969, to enhance the strength of glass by etching the surface to up to a depth of 80 or 20 microns respectively to remove surface defects and thereby strengthen the glass; the patent specifications suggest applying silica or other inorganic layer over the etched surface as a protective or hard layer. According to the Swiss patent specification, optimal strengthening may be achieved by thermal treatment of the glass directly after etching and before provision of a protective layer. According to the US patent, the glass treated is chemically toughened before etching.

GB patent specification 1 359 165 dated 1974 relates to laminated glass for use in buildings and vehicles; it teaches subjecting a face of a glass pane to a rectifying treatment which reduces the impairment of that face by faults liable to cause stress concentrations when tensioning forces are applied to the glass pane, and using that pane in a laminate with the face which has been subject to the rectifying treatment located internally of the laminate. The rectifying treatments described include fire polishing and chemical dissolution (etching) to remove, for example, a glass depth of 60 microns; the face of the glass which is subjected to the rectifying treatment may, before or after that treatment, be compressively stressed e.g. by chemical or thermal tempering (toughening), and advantageously the external layers of both sides of the pane may be subjected to the rectifying treatment and compressively stressed substantially symmetrically. The laminates of the invention are said to be particularly suitable for use as motor vehicle windscreens, and it is proposed to use such a laminate as a vehicle windscreen comprising two panes of glass, one pane having a face that has been subject to a rectifying treatment located internally of the laminate as the inner pane of the windscreen. This arrangement provides a combination of properties which are important for avoiding concussive injury to a person who may make impact with the vehicle windscreen; this was a particular concern at the date of the patent specification when seat belts were less regularly worn by motor vehicle passengers than they are today.

The fact that the strength of glass may be enhanced by etching or other surface treatment to remove surface faults has thus been documented for many years. Nevertheless, the only commercial use of such treatment to enhance glass strength of which the applicants are aware has been to increase the strength of very thin glass (typically 0.05 to 0.5 mm thick) used for solar cell coverglasses. Apart from this, it appears to have remained a paper proposal, despite the long standing requirement for enhanced glass strength in a number of glazing applications, and especially in aircraft windscreens.

In view of the greatly enhanced glass strength that can be achieved by such etching process, and the long standing need for glass components having a greater strength for a given thickness (implied by the requirement for a higher strength:weight ratio), especially but not exclusively for the construction of aircraft windshields, it is surprising that such etching processes have not found wider commercial application. The present applicants believe that it is because of a previous failure to identify the correct conditions for application of the etching technique and have set out to remedy this failure.

They have found that excellent results may be obtained by using thermally tempered glass and etching it to remove a greater depth of glass i.e. more than the 80 microns proposed in the cited specifications referred to above, with the application of a protective layer over the etched surfaces after etching. Although some excellent results were achieved when 60-80 microns were removed by etching (as might be expected as the maximum depth of flaw present appeared to be about 35 microns) the results were insufficiently consistent for practical application, particularly components were to be used in aircraft windshields for which safety and reliability are paramount concerns.

According to the present invention there is provided a method of preparing a glass ply for use as a component of a high strength glazing which comprises etching at least one major face of a thermally toughened glass ply to remove the surface glass to a depth of at least 100 microns, and applying a protective layer over the etched surfaces after etching.

Since the high strength of a thermally tempered glass ply depends on the presence of surface compression in the glass surface, it might have been expected, when using thermally tempered glass, that a smaller (rather than a larger) glass depth should preferentially be removed. Despite this we have found a consistently high performance may be achieved by etching at least one major surface, and preferentially substantially the whole surface of the glass ply, i.e. the major faces and the edge faces, to a depth of at least 100 microns. If the whole surface is etched, the resultant glass strength may be several times the initial already high strength of thermally tempered glass ply prior to etching.

To avoid removing too much of the compression layer, it is preferred to etch away no more than about 200 microns of glass from each of the major faces, and in a particularly preferred embodiment of the invention each of the major faces is etched to a depth in the range 100 to 150 microns.

There is generally a higher concentration of deeper flaws at the cut edges of the glass and, even after the grinding and polishing of the edge faces normally carried out prior to thermal tempering, such flaws may be several hundred microns deeper. It is therefore preferred to preferentially etch the edges to a greater depth, for example a depth greater than 500 microns, than the major faces of the glass. This may conveniently be done in practice by carrying out an initial etching step with the major faces of the glass protected from attack, for example by an acid resistant protective film such as paraffin wax, or a preformed plastics film for example an adhesive polyethylene or polyvinylchloride film, and subsequently removing that protection and subjecting the whole surface of the glass to a further etching step.

The etching may be carried out using aqueous hydrofluoric acid preferably having a concentration in the range from about 3% by weight HF to about 10% by weight HF, preferably a concentration in the range from about 5% by weight HF to about 6% by weight HF, since the more concentrated acid has a tendency to etch the glass unevenly resulting in a roughened surface, while the use of weaker acids extends the etch time necessary to remove the desired amount of glass. If desired, the etchant solution may be buffered, for example, a 5% by weight solution of aqueous HF may be buffered with 5% by weight of ammonium fluoride, NH₄F.

The temperature of the acid is not critical but it is preferred to operate at a temperature in the range 10°C to 30°C in order to achieve an acceptably flat surface at an acceptable etch rate, and it is generally convenient to operate at ambient temperature i.e. about 20°C. The acid should be agitated relative to the glass surface and, using the preferred 5 to 6% by weight aqueous HF at a temperature of 20°C, an etch rate of approximately 50 microns per hour may be achieved.

The glass ply etched is preferably tempered to a modulus of rupture of at least 180 MPa and preferably at least 200 MPa prior to etching, and if it is to be used in a curved glazing product, should be curved to shape prior to etching. In practice, the glass will first be curved to shape and then, while still hot from the curving process, rapidly quenched in, for example powder or air.

The application of the method of invention to glass plies having a thickness in the range 4 to 8 mm prior to etching is particularly important, since plies having a thickness in this range find wide application in high strength laminated glazings, for example, use as aircraft windshields.

It is known that the glass surface should be protected after etching, and the present applicants have found that it is desirable to avoid any unnecessary further handling of the glass prior to protection which may lead to damage of the unprotected surface; it is preferred to apply the protective layer to the glass surface immediately after etching, and prior to lamination of the ply to further plies to produce a laminate.

It is preferred to use a polymeric layer, especially for example of polyvinylbutyral or polyurethane, which may be in the form of preformed thermoplastic sheet. The preformed sheet may be applied over the etched surface and the etched glass and preformed sheet heated above the softening point of the thermoplastic. The thermoplastic may wet onto the etched glass causing it to adhere to the glass; provided the thermoplastic is secured in position over the etched surface, it is not necessary, at this stage, to provide a strong bond between the thermoplastic and the glass.

Alternatively, the etched surfaces may be protected by treatment with a film-forming solution (for example of polyvinylbutyral) which, after evaporation of the solvent and heat treatment, for example at 40 to 80°C, produces a continuous polymer coating which may have a thickness of, for example, 0.5 to 50 microns. The coatings may be applied, for example, by immersion of the etched glass plies in the solution or by spraying, and, for relatively thick coatings applied from solution, multiple applications may be required with intermediate drying and evaporation stages. If desired, a further layer of preformed thermoplastic may be applied over a polymer coating applied from solution as described above.

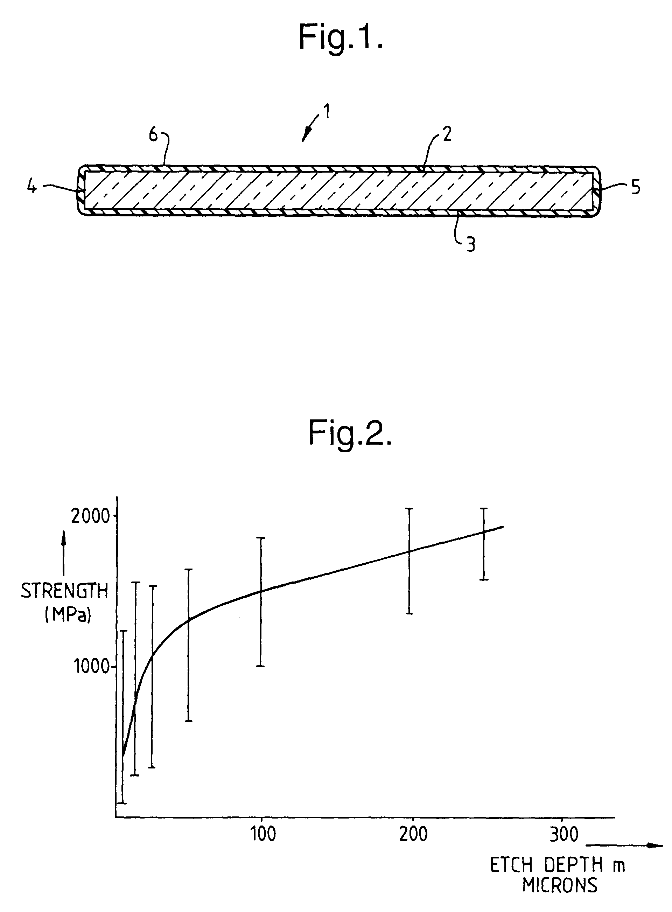

Figure 1 is a section (not to scale) through a rectangular thermally tempered glass ply, generally designated 1, in accordance with the invention which has been etched to remove surface glass to a depth of at least 100 microns. Both the major surfaces 2 and 3, as well as the edge faces (two of which are shown as 4 and 5) have been etched, and the whole etched surface has been covered with a polymeric layer 6, for example of thermoplastic polyvinylbutyral or polyurethane, which has been heated to adhere to the etched glass surface. The thickness of the polymer layer shown in the drawing has been exaggerated, relative to the thickness of the glass layer, for clarity.

The invention is illustrated but not limited by the following Examples.

### Example 1

A batch of 5 mm thick clear float glass samples, in the form of beams 300 mm x 38 mm, were thermally tempered (toughened) by a powder quenching process of the type described in UK patent specification 1 556 051 to a mean modulus of rupture of 227 MPa.

The tempered beams were immersed in a 5% by weight solution of hydrofluoric acid at 18°C, with agitation, for one hundred minutes. The resulting etched beams were washed in tap water, and then in deionised water, and allowed to dry naturally in air.

When dry, the beams were measured by a four point bend test to determine the depth of glass removed by etching and then sandwiched between two layers of PE 193 (a thermoplastic polyurethane available in commerce from Morton Thiokol of USA) and placed in a vacuum bag which was evacuated for thirty minutes and sealed. The beams, in the evacuated vacuum bag, were heated in an oven at 90°C for 60 minutes. After cooling, the vacuum was released and the strength of the beams (encapsulated in polyurethane) measured by a four point bend test.

It was found that a depth of about 125 microns of glass had been removed from each major face, and the etched glass samples, encapsulated in polyurethane, were found to have a mean modulus of rupture of 668 MPa i.e. about three times the already high modulus of the thermally tempered samples prior to etching.

The samples were encapsulated in polyurethane (the polyurethane covering the whole surface i.e. the major surfaces and edge surfaces of the glass) prior to carrying out the strength measurement because it is believed that any handling of the samples, once etched, including handling involved in measuring their strength, would be liable to lead to surface damage resulting in a fall off of strength. Apart from its affect in protecting the surface from damage, its presence is not believed to make any significant contribution to the strength of the beams. Any necessary handling of the glass after etching and prior to encapsulation is carried out very gently using rubber gloves.

### Comparative Example

The procedure exactly as described above was repeated with two further batches of similar beams, except that the beams of the first of the two further batches were etched for ten minutes, and the beams of the second of the two further batches were etched for 20 minutes.

It was found that a depth of about 10 microns of glass had been removed from each major face of the beams of the first further batch and, after encapsulation, the beams of that batch had a mean modulus of rupture of 235 MPa.

It was found that a depth of about 20 microns of glass had been removed from each major face of the beams of the second further batch and, after encapsulation, the beams of that batch had a mean modulus of rupture of 238 MPa.

Thus it is clear that removal by etching of only a thin layer i.e. up to 20 microns of glass has made a negligible difference to the strength of the glass, whilst the removal of over 100 microns (125 microns) had resulted in a very substantial improvement in strength.

### Example 2

Samples of 3mm float glass 60 mm x 60 mm thermally toughened and with typical defects arising from thermal and/or mechanical damage were etched in a solution of hydrofluoric acid to remove glass depths ranging from 10 to over 200 microns; 50 samples were etched to each selected etch depth. The samples were washed and allowed to dry in air, and then encapsulated in a protective layer of polyvinylbutyral to protect them from deterioration prior to or during strength testing by dipping in a solution of polyvinylbutyral and drying to remove solvent; the dipping and drying treatment was repeated several times to provide a polyvinylbutyral encapsulation, 20 to 25 microns thick, over the whole surface of the glass.

The strength of the resulting encapsulated samples was measured by the ring on ring test method, and the average strength of the etched samples for each etch depth plotted against the depth of etch as shown in the accompanying Figure 2. For each depth of etch, a range of glass strengths was observed as indicated by the vertical lines in Figure 2. It should be appreciated that, in practice, for many applications, the minimum strength is more important than the average strength, and Figure 2 shows that, when the etch depth was over 100 microns, the minimum strength observed was about 1000 MPa.

## Claims

1. A method of preparing a glass ply for use as a component of a high strength glazing which comprises etching at least one major face of a thermally toughened glass ply to remove the surface glass to a depth of at least 100 microns, and applying a protective layer over the etched surface after etching.

2. A method as claimed in claim 1 which comprises etching substantially the whole surface of the glass ply to a depth of at least 100 microns.

3. A method as claimed in claim 1 or claim 2 which comprises etching at least one major face of the glass ply to a depth in the range 100 to 200 microns.

4. A method as claimed in claim 3 which comprises etching the major faces of the glass ply to a depth in the range 100 to 150 microns.

5. A method as claimed in any of the preceding claims which comprises preferentially etching the edges of the glass to a greater depth than the major faces.

6. A method as claimed in any of the preceding claims which comprises etching a glass ply thermally tempered to a modulus of rupture of at least 170, preferably at least 180, MPa prior to etching.

7. A method as claimed in any of the preceding claims which comprises etching a glass ply curved to shape for use as a component of a laminated glazing prior to etching.

8. A method as claimed in any of the preceding claims wherein the glass ply has a thickness in the range 4 to 8 mm prior to etching.

9. A method as claimed in any of the preceding claims wherein a polymeric protective layer is applied over the etched surfaces after etching.

10. A method as claimed in claim 1 wherein a preformed thermoplastic sheet is applied over the etched glass surface and the etched glass and preformed sheet heated above the softening point of the thermoplastic.

11. A method as claimed in claim 10 wherein the etched glass ply is encapsulated in a preformed thermoplastic sheet after etching.

12. A method as claimed in any of claims 1 to 9 wherein the polymeric protective layer is applied by applying a solution of thermoplastic polymer to the etched glass surface and drying to remove the solvent.

13. A method as claimed in any of the preceding claims wherein a protective layer of thermoplastic polyurethane is applied over the etched surface.

14. A high strength glazing comprising a glass ply prepared by a method as claimed in any of the preceding claims.

## Patentansprüche

1. Verfahren zur Behandlung einer Glasschicht zur Verwendung als Komponente einer hochfesten Verglasung, gekennzeichnet durch
Ätzen zumindest einer Hauptfläche einer thermisch gehärteten Glasschicht zum Entfernen des Oberflächenglases bis zu einer Tiefe von mindestens 100 µm und Auftragen einer Schutzschicht auf die geätzte Fläche nach dem Ätzen.

2. Verfahren nach Anspruch 1, dadurch gekennzeichnet, daß im wesentlichen die gesamte Oberfläche der Glasschicht bis zu einer Tiefe von mindestens 100 µm geätzt wird.

3. Verfahren nach Anspruch 1 oder 2, dadurch gekennzeichnet, daß zumindest eine Hauptfläche der Glasschicht bis zu einer Tiefe im Bereich von 100 bis 200 µm geätzt wird.

4. Verfahren nach Anspruch 3, dadurch gekennzeichnet, daß die Hauptflächen der Glasschicht bis zu einer Tiefe im Bereich von 100 bis 150 µm geätzt werden.

5. Verfahren nach einem der vorhergehenden Ansprüche, dadurch gekennzeichnet, daß vorzugsweise die Ränder des Glases auf eine größere Tiefe als die Hauptflächen geätzt werden.

6. Verfahren nach einem der vorhergehenden Ansprüche, dadurch gekennzeichnet, daß eine Glasschicht vor dem Ätzvorgang bis auf einen Bruchmodul von mindestens 170 Mpa, vorzugsweise 180 Mpa, thermisch gehärtet wird.

7. Verfahren nach einem der vorhergehenden Ansprüche, dadurch gekennzeichnet, daß eine vor dem Ätzvorgang zu einer vorgegebenen Form gebogene Glasschicht geätzt und als Komponente eines Verbundglases verwendet wird.

8. Verfahren nach einem der vorhergehenden Ansprüche, dadurch gekennzeichnet, daß die Dicke der Glasschicht vor dem Ätzen im Bereich von 4 bis 8 mm liegt.

9. Verfahren nach einem der vorhergehenden Ansprüche, dadurch gekennzeichnet, daß nach dem Ätzvorgang eine Polymer-Schutzschicht auf die geätzten Flächen aufgebracht wird.

10. Verfahren nach Anspruch 1, dadurch gekennzeichnet, daß eine vorgefertigte thermoplastische Folie oder Lage auf die geätzte Fläche aufgebracht und das geätzte Glas sowie die vorgefertigte Folie bis über den Erweichungspunkt des Thermoplastes erwärmt werden.

11. Verfahren nach Anspruch 10, dadurch gekennzeichnet, daß nach dem Ätzvorgang die geätzte Glasscheibe mit einer vorgefertigten Thermoplastfolie ummantelt wird.

12. Verfahren nach einem der Ansprüche 1 bis 9, dadurch gekennzeichnet, daß die Polymer-Schutzschicht durch Auftragen einer thermoplastischen Polymer-Lösung auf die geätzten Flächen und Trocknen zum Entfernen des Lösungsmittels hergestellt wird.

13. Verfahren nach einem der vorhergehenden Ansprüche, dadurch gekennzeichnet, daß eine Schicht aus thermoplastischem PUR auf die geätzte Fläche aufgebracht wird.

14. Hochfeste Verglasung, gekennzeichnet durch eine gemäß dem Verfahren nach einem der vorhergehenden Ansprüche hergestellte Glasschicht.

## Revendications

1. Procédé de préparation d'une feuille de verre destinée à être utilisée comme élément d'un vitrage à haute résistance, qui comprend l'attaque d'au moins une face principale d'une feuille de verre durcie par voie thermique pour l'enlèvement du verre superficiel jusqu'à une profondeur d'au moins 100 microns, et l'application, après l'attaque, d'une couche protectrice sur la surface attaquée.

2. Procédé selon la revendication 1, qui comprend l'attaque de pratiquement toute la surface de la feuille de verre jusqu'à une profondeur d'au moins 100 microns.

3. Procédé selon l'une des revendications 1 et 2, qui comprend l'attaque d'au moins une face principale de la feuille de verre jusqu'à une profondeur comprise entre 100 et 200 microns.

4. Procédé selon la revendication 3, qui comprend l'attaque des faces principales de la feuille de verre jusqu'à une profondeur comprise entre 100 et 150 microns.

5. Procédé selon l'une des revendications précédentes, qui comprend l'attaque préférentielle des bords du verre jusqu'à une profondeur supérieure à la profondeur d'attaque des faces principales.

6. Procédé selon l'une des revendications précédentes, qui comprend, avant l'attaque, l'attaque d'une feuille de verre trempée par voie thermique à un module de rupture d'au moins 170 MPa, de préférence d'au moins 180 MPa.

7. Procédé selon l'une des revendications précédentes, qui comprend l'attaque d'une feuille de verre qui, avant l'attaque, a été courbée pour être utilisée comme élément d'un vitrage feuilleté.

8. Procédé selon l'une des revendications précédentes, dans lequel la feuille de verre a avant l'attaque une épaisseur comprise entre 4 et 8 mm.

9. Procédé selon l'une des revendications précédentes, dans lequel une couche protectrice polymérique est appliquée après l'attaque sur les surfaces attaquées.

10. Procédé selon la revendication 1, dans lequel une feuille thermoplastique préformée est appliquée sur la surface de verre attaquée et le verre attaqué et la feuille préformée sont chauffés au-dessus du point de ramollissement du thermoplastique.

11. Procédé selon la revendication 10, dans lequel la feuille de verre attaquée est, après l'attaque, encapsulée dans une feuille thermoplastique préformée.

12. Procédé selon l'une des revendications 1 à 9, dans lequel la couche protectrice polymérique est appliquée par application d'une solution de polymère thermoplastique sur la surface de verre attaquée et séchage pour l'élimination du solvant.

13. Procédé selon l'une des revendications précédentes, dans lequel une couche protectrice de polyuréthanne thermoplastique est appliquée sur la surface attaquée.

14. Vitrage à haute résistance comprenant une feuille de verre préparée par un procédé selon l'une des revendications précédentes.
